# EUROPÄISCHE PATENTANMELDUNG

(11) **EP 2 333 922 A2**
(43) Veröffentlichungstag der Anmeldung: **15.06.2011**
(21) Anmeldenummer: 10014807.1
(22) Anmeldetag: 20.11.2010
(51) Int. Cl.: H02G 3/08, H02G 15/007

(54) **Anschlussdose für Solarmodule**

(30) Priorität: 12.12.2009 DE 102009058118
(71) Anmelder: Lumberg Connect GmbH, 58579 Schalksmühle (DE)
(72) Erfinder: Richter, Michael, 58579 Schalksmühle (DE)
(74) Vertreter: Ostriga, Sonnet, Wirths & Roche

(57) **Zusammenfassung**

Dargestellt und beschrieben ist eine Anschlussdose für Solarmodule, mit einem Bodenteil, welches auf dem Solarmodul befestigt, insbesondere mit dem Solarmodul verklebt ist und einen Aufnahmeraum für diverse Funktionsteile sowie für elektrische Leitungen und deren Kontakte ausbildet, und mit einem Deckel, der den Aufnahmeraum des Bodenteils gegen die Umgebung verschließt, wobei die Anschlussdose eine Zugentlastung für eine in die Anschlussdose eintretende Leitung aufweist, welche insbesondere durch eine deckel- und eine bodenseitige Teilöffnung gebildet ist, die zusammen eine gegenüber der Leitung mit Untermaß gefertigte, die Zugentlastung bildende Leitungseintrittsöffnung bilden, wobei der Leitungseintrittsöffnung ein Bügel vorgeordnet ist, der die Leitung überfängt und in einer parallel zur Befestigungsfläche der Anschlussdose auf dem Solarmodul angeordneten Ausrichtung hält.

## Beschreibung

Die Erfindung betrifft eine Anschlussdose für Solarmodule, mit einem Bodenteil, welches auf dem Solarmodul befestigt, insbesondere mit dem Solarmodul verklebt ist und einen Aufnahmeraum für diverse Funktionsteile sowie für elektrische Leitungen und deren Kontakte ausbildet, und mit einem Deckel, der den Aufnahmeraum des Bodenteils gegen die Umgebung verschließt, wobei die Anschlussdose eine Zugentlastung für eine in die Anschlussdose eintretende Leitung aufweist, welche insbesondere durch eine deckel- und eine bodenseitige Teilöffnung gebildet ist, die zusammen eine gegenüber der Leitung mit Untermaß gefertigte, die Zugentlastung bildende Leitungseintrittsöffnung bilden.

Anschlussdosen für Solarmodule werden gewöhnlicher Weise auf deren Rückseite montiert und insbesondere fest aufgeklebt. Sie dienen der elektrischen Anbindung der Solarmodule an ein Verbundnetz. Hierzu werden die aus dem Solarmodul austretenden meist bandartigen Folienleiter innerhalb der Anschlussdose mit einpoligen Rundleitern verbunden. Darüber hinaus dient die Anschlussdose der Aufnahme diverser Funktionselemente, wie beispielsweise Bypassdioden.

An Anschlussdosen für Solarmodule werden hohe Anforderungen an Haltbarkeit und Dichtigkeit gestellt. So muss die Lebensdauer einer solchen Anschlussdose mindestens der durchschnittlichen Lebensdauer eines Solarmoduls von 25 Jahren bei voller Funktionstüchtigkeit entsprechen. Aus diesem Grund werden Anschlussdosen für Solarmodule aus hochwertigen Kunststoffen und passgenauen, gegeneinander aufwendig abgedichteten Bauteilen gefertigt. Der Innenraum ist gegenüber der Außenumgebung vollständig abgedichtet. Zur Vermeidung von Kondensat in der Anschlussdose sind üblicherweise Gasaustauschelemente vorgesehen, über die der Innenraum mit der Außenumgebung in Verbindung steht.

Eine besondere Bedeutung kommt der Zugentlastung der in die Anschlussdose eintretenden Leiter zu. Diese sind im Stand der Technik in aller Regel durch Hutmuttern gelöst, die über Quetschlamellen die Leitung halten. Diese haben den wesentlichen Nachteil, dass die Leitung recht aufwendig durch eine Öffnung in die Anschlussdose eingeführt werden muss, was eine maschinelle Vormontage der Anschlussdose und deren Vorbestückung mit in die Anschlussdose eintretenden Leitern wesentlich erschwert. Bekannt ist zudem, die eintretenden Leiter mit Crimphülsen zu versehen, die sich zugentlastend an geeigneten Bauteilen innerhalb der Anschlussdose abstützen.

Eine besonders einfach aufgebaute und in ihrer Wirkung in jeder Hinsicht ausreichende Zugentlastung in einer Anschlussdose der Anmelderin ist in DE 20 2008 006 119 U1 offenbart. Hier wird das Kabel innerhalb der Anschlussdose unter einem Winkel von 45° geführt. Die Eintrittsöffnung für die Leitung ist aus zwei einander zugeordneten Teilöffnungen von Boden- und Deckelteil realisiert. Der wesentliche Vorteil dieser Anschlussdose ist darin zu sehen, dass die Leitung in das Bodenteil der Anschlussdose eingelegt werden kann und nicht durch Öffnungen hindurchgeschoben werden muss, so dass eine maschinelle Vormontage einfach realisierbar ist. Darüber hinaus ist die im Wesentlichen nur auf der winkligen Kabelführung beruhende Zugentlastung technisch ausgesprochen einfach, aber hoch wirksam gelöst. Die Teilöffnungen, welche bei montiertem Deckel die Eintrittsöffnung für die Leitung bilden, sind zur Abdichtung und zur Unterstützung der Zugentlastung gegenüber der Leitung mit leichtem Untermaß gefertigt.

Es hat sich jedoch in der Praxis erwiesen, dass eine zusätzliche Entlastung der Anschlussdose insbesondere gegen winklig zur Befestigungsoberfläche der Anschlussdose auf dem Solarmodul gerichtete Zugkräfte der Leitung von Vorteil ist, da diese Kräfte auch gegen die Schließkräfte der Anschlussdose wirken.

Aufgabe der Erfindung ist es folglich, eine verbesserte Zugentlastung zu schaffen.

Gelöst wird die Erfindung mit den Merkmalen des Anspruches 1, insbesondere mit den kennzeichnenden Merkmalen, wonach der Leitungseintrittsöffnung ein Bügel vorgeordnet ist, der das Kabel überfängt und in einer parallel zur Befestigungsfläche der Anschlussdose auf dem Solarmodul angeordneten Ausrichtung hält.

Der wesentliche Vorteil der Erfindung ist darin zu sehen, dass sie die eigentliche Zugentlastung ― insbesondere nach DE 20 2008 006 119 U1, die hinsichtlich des einfachen Aufbaus und der Möglichkeit der maschinellen Vormontage besonders vorteilhaft ausgestaltet ist ― nicht verändert wird. Stattdessen ist der Zugentlastung mit dem Bügel ein zusätzliches Bauteil vorgeordnet, welches gegen winklig zur Befestigungsfläche der Anschlussdose gerichtete Kräfte wirkt und diese abfängt.

Um insbesondere den Deckel der Anschlussdose von solchen Kräften zu entlasten ist vorgesehen, dass der Bügel Teil des Bodenteils der Anschlussdose ist.

Um weiterhin eine einfache Montage der Leitung und insbesondere auch eine maschinelle Vormontage einer Anschlussdoseneinheit mit Leitungen zu ermöglichen, ist vorgesehen, dass der Bügel hakenartig mit einem sich etwa in Vertikalrichtung zur Befestigungsfläche der Anschlussdose erstreckenden Bügelfreiraum ausgebildet ist, so dass sich die Leitung mittels einer zur Befestigungsoberfläche in etwa parallelen Bewegung unter den Bügel schieben lässt.

Um die Leitung nach der Montage unter dem Bügel zu sichern ist vorgesehen, dass die Anschlussdose mit einem Schließorgan versehen ist, welches den Bügelfreiraum zur sicheren Einlage der Leitung unter dem Bügel schließt, wobei es vorteilhaft ist, wenn der Deckel das Schließorgan trägt.

Weitere Vorteile der Erfindung sowie ein besseres Verständnis derselben ergeben sich aus der nachfolgenden Zeichnungsbeschreibung eines Ausführungsbeispieles. Es zeigen:
- Fig.1: Eine Explosionsansicht einer erfindungsgemäßen Anschlussdose,
- Fig. 2: Detailansicht des Leitungseintritts in die Anschlussdose gemäß Fig. 1 mit dem erfindungsgemäß der Leitungseintrittsöffnung vorgelagerten Bügel.

In den Figuren ist eine Anschlussdose gemäß der Erfindung insgesamt mit der Bezugsziffer 10 bezeichnet. Diese Anschlussdose 10 umfasst ein Bodenteil 11 sowie einen Deckel 12.

Das Bodenteil 11 bildet einen Aufnahmeraum 13 aus, welcher von einer senkrecht auf einer Platte 14 angeordneten Wandung 15 umgeben ist. Die Wandung 15 ist derart auf der Platte 14 angeordnet, dass ein gegenüber der Wandung 15 nach außen überstehender Kragen 16 von der Platte 14 gebildet ist. Mit der Bezugsziffer 17 versehene Leitungen treten durch nicht näher bezeichnete Aussparungen in den Aufnahmeraum 13 unter einem zugentlastenden Winkel von etwa 45° ein.

Der Aussparung der Wandung 15 des Bodenteils 11 vorgeordnet sind die erfindungsgemäßen Bügel 18, die in etwa hakenartig ausgebildet und einstückig-stoffschlüssiger Bestandteil des Kragens 16 sind. Sie werden von einem senkrecht zum Kragen 16 gerichteten Schenkel, an den sich ein in etwa um 90° abgewinkelter Schenkel anschließt, gebildet. In Folge dessen weisen die Bügel 18 einen seitlichen, dem senkrechten Schenkel gegenüberliegenden Bügelfreiraum 19 auf, der ein seitliches Einschwenken der Leitung 17 unter den Bügel 18 ermöglicht. Diese konkrete Ausgestaltung des Bügels 18 erleichtert die Montage der Leitung 17 erheblich, da diese nicht etwa durch eine Öffnung durchgesteckt werden muss, was eine maschinelle aber auch eine manuelle Montage erheblich erschweren würde.

Der Deckel 12 umfasst zunächst ein den Aufnahmeraum 13 verschließendes Deckteil 20, welches mit einem in etwa vertikal in Richtung Bodenteil 11 gerichteten Kragen 21 versehen ist. Dieser Kragen 21 ist mit Rasthaken 22 versehen, die in zugehörigen, nicht dargestellten Rastöffnungen der Wandung 15 eingreifen und den Deckel 12 sicher auf dem Bodenteil verankern. Der Kragen 21 weist ebenfalls nicht näher bezeichnete Aussparungen zur Einführung der Leitung 17 in den Aufnahmeraum 13 auf. Die bodenteilseitigen und die deckelseitigen Aussparungen sind korrespondierend in Form von teilkreisartigen Ausnehmungen gebildet. Diese Ausnehmungen bilden bei aufgesetztem Deckel zusammen die gegenüber dem Leiter mit Untermaß gefertigte Leitereintrittsöffnung.

Der Deckel 12 umfasst erfindungsgemäße Schließorgane 23. Diese sind derart ausgerichtet, dass sie bei Montage des Deckels 12 auf dem Bodenteil 11 neben dem Bügel 18, den Bügelfreiraum 19 verschließend zur Anordnung gelangen.

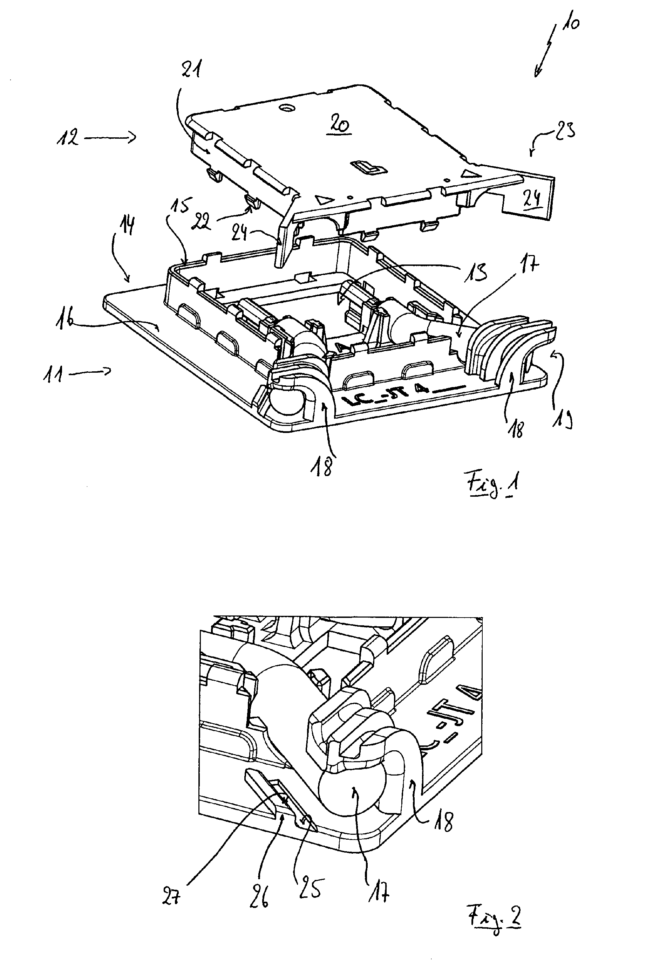

Vorliegend sind die Schließorgane 23 als zum Kragen 21 des Deckelteils 20 in etwa in einem 45° Winkel und senkrecht zum Kragen 16 der Platte 14 gerichtete Stege 24 ausgebildet. Diese sitzen bei montiertem Deckel 12 zur Stabilisierung gegen Seitenkräfte in Nuten 25 des Kragens 16 der Platte 14 ein, wobei seitlich einer jeden Nut zumindest ein Stützsteg 26 vorgesehen ist, der zunächst ebenfalls den Steg 24 gegen Seitenkräfte der Leitung 17 stabilisiert. Zusätzlich ist der Stützsteg 26 mit einer Führungsschräge 27 versehen, auf welcher der Steg 24 in die Nut 25 abgleiten kann (siehe Fig. 2). Hierdurch lässt sich unter Berücksichtigung von Material- und Fertigungstoleranzen in jedem Falle eine Abstützung der Stege 24 durch einfaches Aufsetzen des Deckels 12 auf das Bodenteil 11 erreichen.

Nicht dargestellt ist eine zweite Ausführungsform der Erfindung, bei welcher ein einseitig offener Bügel als separates Bauteil ausgebildet ist. Dieser Bügel ist brücken- oder bogenartig geformt. Die Bügelenden weisen Befestigungsmittel auf, die mit korrespondierenden Befestigungsmitteln des Bodenteil zusammenwirken. Nach Montage der Anschlussdose wird der Bügel über das Kabel gelegt und auf dem Bodenteil befestigt. Die elektrische Leitung ist dann allseitig von Bügel und Bodenteil in etwa tunnelartig umschlossen.

Der wesentliche Vorteil der Erfindung ist darin zu sehen, dass der Bügel 18 winklig zur Befestigungsfläche der Anschlussdose 10 gerichtete Zugkräfte abfängt und insofern die Schließorgane des Deckels ― namentlich die Rasthaken 22 - hinsichtlich der auftretenden Kräfte entlastet. In Folge dessen lassen sich durch die Zugentlastungsfunktion, welche aus dem Stand der Technik bekannt ist und die im Wesentlichen aus dem Zusammenspiel von winkliger Leitungsführung und Leitungseintrittsöffnung besteht, und dem erfindungsgemäßen Bügel wesentlich höhere Zugkräfte abfangen. Dabei bleibt die Zugentlastung der Anschlussdose 10 weiterhin einfach und kostengünstig und vor allen Dingen hinsichtlich der maschinellen Vormontage besonders vorteilhaft ausgestaltet.

### Bezugszeichenliste:

- 10: Anschlussdose
- 11: Bodenteil von 10
- 12: Deckel von 10
- 13: Aufnahmeraum von 11
- 14: Platte
- 15: Wandung
- 16: Kragen
- 17: Leitungen
- 18: Bügel
- 19: Bügelfreiraum
- 20: Deckteil
- 21: Kragen von 20
- 22: Rasthaken
- 23: Schließorgan
- 24: Stege
- 25: Nut
- 26: Stützsteg
- 27: Führungsschräge

## Patentansprüche

1. Anschlussdose (10) für Solarmodule, mit einem Bodenteil (11), welches auf dem Solarmodul befestigt, insbesondere mit dem Solarmodul verklebt ist und einen Aufnahmeraum (13) für diverse Funktionsteile sowie für elektrische Leitungen (17) und deren Kontakte ausbildet, und mit einem Deckel (12), der den Aufnahmeraum (13) des Bodenteils (11) gegen die Umgebung verschließt, wobei die Anschlussdose (10) eine Zugentlastung für eine in die Anschlussdose (10) eintretende Leitung (17) aufweist, welche insbesondere durch eine deckel- und eine bodenseitige Teilöffnung gebildet ist, die zusammen eine gegenüber der Leitung (17) mit Untermaß gefertigte, die Zugentlastung bildende Leitungseintrittsöffnung bilden, **dadurch gekennzeichnet, dass** der Leitungseintrittsöffnung ein Bügel (18) vorgeordnet ist, der die Leitung (17) überfängt und in einer parallel zur Befestigungsfläche der Anschlussdose (10) auf dem Solarmodul angeordneten Ausrichtung hält.

2. Anschlussdose nach Anspruch 1, **dadurch gekennzeichnet, dass** der Bügel (18) Teil des Bodenteils (11) der Anschlussdose (10) ist.

3. Anschlussdose nach Anspruch 1 oder 2, **dadurch gekennzeichnet, dass** der Bügel (18) hakenartig mit einem sich etwa in Vertikalrichtung zur Befestigungsfläche der Anschlussdose erstreckenden Bügelfreiraum (19) ausgebildet ist, so dass sich die Leitung (17) mittels einer zur Befestigungsoberfläche in etwa parallelen Bewegung unter den Bügel (18) schieben lässt.

4. Anschlussdose nach Anspruch 3, **dadurch gekennzeichnet, dass** die Anschlussdose (10) mit einem Schließorgan (23) versehen ist, welches den Bügelfreiraum (19) zur sicheren Einlage der Leitung (17) unter dem Bügel (18) schließt.

5. Anschlussdose nach den Ansprüchen 2, 3, und 4, **dadurch gekennzeichnet, dass** der Deckel (12) das Schließorgan (23) trägt.

6. Anschlussdose nach Anspruch 1 oder 2, **dadurch gekennzeichnet, dass** der Bügel (18) ein brücken- oder bogenartiges, einseitig offenes Bauteil ist und die elektrische Leitung (17) in Zusammenspiel mit dem Bodenteil (11) allseitig überfangend auf dem Bodenteil (11) der Anschlussdose befestigbar ist.
